Europäisches Patentamt

European Patent Office

Office européen des brevets

(19)

(11) Numéro de publication : **0 056 930**
**B1**

(12) **FASCICULE DE BREVET EUROPÉEN**

(45) Date de publication du fascicule du brevet :
15.08.84

(51) Int. Cl.³ : **E 21 B 25/06**

(21) Numéro de dépôt : **81870052.8**

(22) Date de dépôt : **23.12.81**

(54) Elément de tube intérieur en résine synthétique pour appareil carottier à double tube et procédé de fabrication de cet élément de tube.

(30) Priorité : **30.12.80 BE 203359**

(43) Date de publication de la demande :
**04.08.82 Bulletin 82/31**

(45) Mention de la délivrance du brevet :
**15.08.84 Bulletin 84/33**

(84) Etats contractants désignés :
**DE FR GB IT NL**

(56) Documents cités :
**US-A- 1 850 434**
**US-A- 2 038 792**
**US-A- 3 092 192**
**US-A- 3 874 465**
**BERGBAUTECHNIK, vol. 16, no. 4, avril 1966 LEIPZIG (DE) R. ROSLER: "Gerät zur Entnahme ungestörter Bodenproben für geoelektrische Messungen", pages 210-211**

(73) Titulaire : **DIAMANT BOART Société anonyme**
**Avenue du Pont de Luttre, 74**
**B-1190 Bruxelles (BE)**

**WAVIN B.V.**
**Händellaan 251**
**NL-8031 EM Zwolle (NL)**

(72) Inventeur : **Lambot, Honoré Joseph**
**16, rue Van Volxem**
**B-1430 Wauthier-Braine (BE)**
Inventeur : **Fliervoet, Johannes Hermanus Maria**
**Handellaan 71**
**Zwolle (NL)**
Inventeur : **Kramer, Pieter**
**Poolsterlaan 3**
**Hardenberg (NL)**

(74) Mandataire : **De Brabanter, Maurice et al**
**Bureau VANDER HAEGHEN 63 Avenue de la Toison d'Or**
**B-1060 Bruxelles (BE)**

## Description

La présente invention concerne un élément de tube intérieur pour appareil carottier à double tube, constitué d'un tronçon de tube de section sensiblement constante, en résine synthétique, muni à ses extrémités de raccords destinés à le relier à d'autres éléments de tube intérieur.

Elle a également pour objet un procédé de fabrication d'éléments de tube intérieur du type susdit, munis de raccords permettant leur assemblage à d'autres éléments de tube intérieur.

Les appareils carottiers à double tube sont des appareils couramment utilisés en forage minier ou pétrolier en vue de prélever un échantillon des couches géologiques traversées par l'appareil carottier. Ils comprennent, d'une part, un tube extérieur constitué d'un train de tiges creuses extérieur, entraînant une couronne de forage et, d'autre part, un tube intérieur constitué d'un train d'éléments de tube intérieur, verrouillé longitudinalement par une de ses extrémités au tube extérieur qui peut tourner autour de ce tube intérieur, muni à son autre extrémité d'un manchon extracteur de carotte. Le tube intérieur est généralement constitué d'acier.

On connaît par le brevet américain 3 092 192 un appareil carottier, comportant un tube extérieur en acier, un tube intérieur réalisé également en acier et éventuellement composé de deux coquilles semi-tubulaires ainsi qu'un troisième tube concentrique, entièrement en résine synthétique, destiné à envelopper et à protéger une carotte de sondage.

L'inconvénient majeur de ces appareils carottiers à triple tube appelés couramment « liners » est leur encombrement. La présence d'un troisième tube en résine synthétique réduit la section de l'appareil carottier disponible pour accueillir la carotte de sondage. Or, les résultats d'analyses lors d'une prospection minière ou pétrolière sont d'autant plus précis que la section de la carotte de sondage est plus grande. En outre, les appareils à triple tube sont de construction relativement difficile puisqu'il faut adapter les dimensions des appareils carottiers aux tubes de matière plastique ou vice-versa. Les tolérances de fabrication sont sévères puisqu'il faut que le tube en matière plastique adhère parfaitement au tube intérieur en acier.

On connaît aussi par le brevet américain n° 3 874 465 un appareil carottier à triple tube qui est analogue à celui décrit ci-dessus, mais dont le tube intérieur est constitué de deux coquilles semi-tubulaires en résine synthétique, armées de fibres de verre. Les coquilles semi-tubulaires sont garnies intérieurement d'un troisième tube en caoutchouc synthétique.

Comme les appareils carottiers à triple tube en acier décrits ci-dessus, les appareils carottiers à triple tube en résine synthétique ont le désavantage d'être encombrants et donc de ne permettre le prélèvement que d'une carotte de sondage de section plus petite que celle d'une carotte obtenue à l'aide d'un carottier double, et ce, pour un appareil carottier de diamètre extérieur identique.

Un deuxième inconvénient des appareils carottiers connus à triple tube en matière plastique réside en leur fabrication difficile. Dans une première étape il faut former un tube en résine synthétique armé de fibres de verre. Il faut ensuite scier le tube dans le sens longitudinal de manière à former deux coquilles semi-tubulaires. En sciant le tube il se forme inévitablement un nuage de poussière de résine synthétique chargé de fines particules de fibres de verre, qui présentent non seulement le danger d'irriter les voies respiratoires, mais aussi l'inconvénient de provoquer des démangeaisons sur tout le corps. De plus, ces particules de fibre de verre ont la réputation d'être cancérigènes.

Un troisième inconvénient des appareils carottiers précités réside en leur faible résistance à l'éclatement.

Les carottes de sondage prélevées en puits profonds dans des couches géologiques riches en éléments volatils contiennent des gaz adsorbés ou occlus, soumis à des pressions considérables, auxquelles doit pouvoir résister le tube intérieur de l'appareil carottier lorsqu'on remonte celui-ci. Dès que l'appareil carottier est ramené en surface, on dégage la carotte de sondage en détachant et en retirant les coquilles semi-tubulaires. Ces coquilles semi-tubulaires contiennent une gaine de caoutchouc qui, en se déformant, permet aux gaz de s'échapper. Cette gaine de caoutchouc forme autour de la carotte de sondage une enveloppe protectrice qui empêche toute détérioration de la carotte, mais elle ne permet pas de conserver tous les éléments volatils dans celle-ci.

La présente invention a pour but de remédier aux inconvénients décrits ci-dessus tout en assurant une protection parfaite et une manutention aisée des carottes de sondage.

La présente invention a pour objet un élément de tube intérieur pour appareil carottier à double tube, constitué d'un tronçon de tube de section sensiblement constante, en résine synthétique, muni à ses extrémités de raccords destinés à le relier à d'autres éléments de tube intérieur, cet élément étant essentiellement caractérisé en ce que le tronçon de tube susdit est constitué entièrement de résine synthétique armée de fibres et en ce que le tube susdit chevauche, à chacune de ses extrémités, une partie des raccords présentant une surface rugueuse accrochée aux fibres précitées.

Dans une forme de réalisation, les raccords susdits comprennent une surface munie d'une série de stries destinées à accrocher les fibres avantageusement torsadées.

Dans une forme de réalisation plus particulière, le raccord susdit comprend une bague munie d'un moletage destiné à accrocher les fibres susdites mises en nappe.

Ces raccords sont avantageusement des nipples en acier, disposés coaxialement au tronçon de tube à chacune des extrémités de ce tronçon et incorporés à celui-ci, de manière que le diamètre intérieur de la partie chevauchée par le tube soit égal au diamètre intérieur du tronçon de tube.

Le tronçon de tube lui-même est réalisé avantageusement en résine époxy, armée de préférence de nappes de fibres de verre.

L'invention a pour objet également un procédé de fabrication des éléments de tube intérieur pour carottier à double tube décrits ci-dessus, ce procédé étant essentiellement caractérisé en ce qu'on dispose sur un mandrin cylindrique de section constante, tournant autour de son axe longitudinal, à une distance prédéterminée, correspondant à la longueur de l'élément de tube à réaliser, deux raccords, dont une partie présente un diamètre intérieur sensiblement identique à celui du mandrin, ainsi qu'une surface extérieure rugueuse, et en ce qu'on enroule hélicoïdalement, autour dudit mandrin, des fibres enrobées de résine synthétique, en recouvrant également la partie rugueuse des raccords susdits.

Selon une particularité de l'invention, on enroule les fibres sous forme de nappes tissées ou non tissées de fibres torsadées entrecroisées autour du mandrin, de manière que l'angle de croisement des fibres soit compris entre 40 et 60 °C.

Selon une autre particularité de l'invention, on dispose sur le mandrin précité, deux nipples de raccord en acier munis chacun d'une bague d'accrochage qui présente un diamètre intérieur sensiblement identique à celui du mandrin et une surface extérieure munie d'un moletage, on enroule hélicoïdalement sur le mandrin et sur chaque bague susdite des nappes de fibres enrobées de résine synthétique.

On a pu constater de manière surprenante que les éléments de tube intérieur selon l'invention, réalisés en résine synthétique renforcée de fibres, offrent une résistance à l'éclatement, à l'écrasement et à la traction tout à fait comparable à celle d'un tube intérieur réalisé en acier, malgré les températures élevées qui règnent dans les puits de forage où sont utilisés les appareils carottiers.

D'autres détails et particularités de l'invention apparaîtront au cours de la description des dessins annexés qui représentent schématiquement et à titre d'illustration non limitative, une forme de réalisation d'un élément de tube intérieur selon l'invention et qui illustrent un procédé de fabrication de cet élément de tube.

Dans ces dessins :

la figure 1 représente une coupe longitudinale d'un élément de tube intérieur selon l'invention muni de nipples de raccord taraudés ;

la figure 2 montre une vue en perspective d'une section de tube contenant une section de carotte,

la figure 3 est une vue en perspective d'une machine destinée à fabriquer un élément de tube intérieur suivant l'invention ;

la figure 4 est une coupe longitudinale d'un élément de tube en cours de fabrication dans la machine représentée à la figure 3 ;

la figure 5 est une coupe longitudinale analogue à celle de la figure précédente d'un élément de tube entièrement terminé, et

la figure 6 est une coupe longitudinale d'un appareil carottier à double tube muni d'un élément de tube intérieur suivant l'invention.

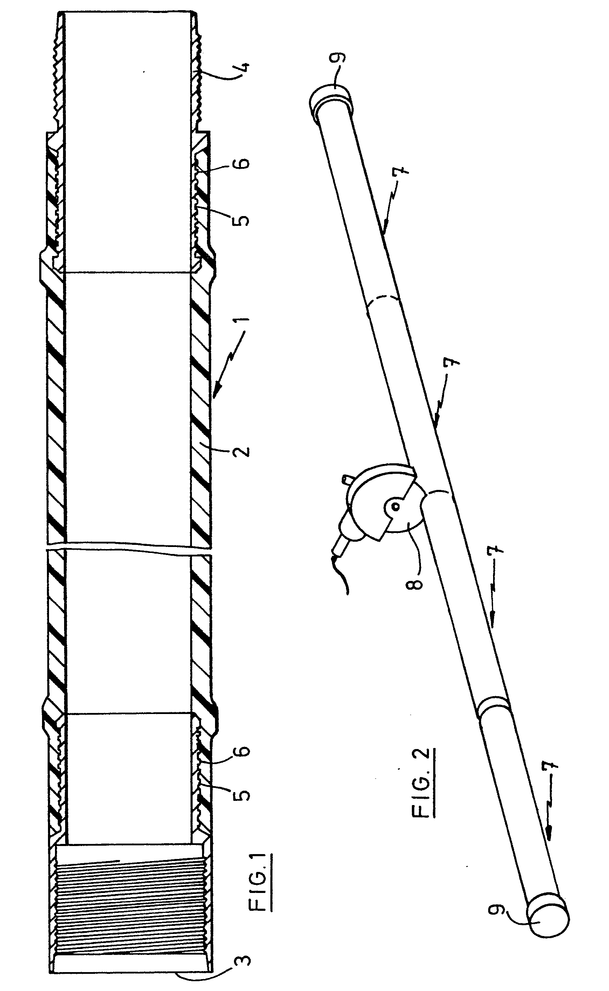

L'élément de tube intérieur 1 pour carottier à double tube selon l'invention, montré à la figure 1, consiste en un tronçon de tube rigide 2 en résine époxy, muni à ses extrémités d'un nipple de raccord taraudé, en acier, femelle 3 et d'un nipple de raccord taraudé, en acier, mâle 4.

La section du tube est sensiblement constante. La résine époxy est armée de fibres torsadées 5. L'élément de tube intérieur 1 chevauche, à chacune de ses extrémités, une partie d'un raccord en acier 3, 4 présentant une surface rugueuse 6 accrochée aux fibres torsadées précitées. Les fibres torsadées 5 sont avantageusement mises en nappes tissées ou non tissées. Les raccords 3, 4 susdits comprennent une bague 13 munie d'un moletage.

Ces raccords 3, 4 sont des nipples en acier disposés coaxialement à l'élément ou tronçon de tube 1 à chacune des extrémités de cet élément 1. Les nipples sont incorporés à l'élément de tube 1 de manière que le diamètre intérieur de la partie chevauchée par l'élément de tube soit égal au diamètre intérieur de cet élément.

Dès que l'appareil carottier est ramené en surface et sans qu'il soit nécessaire de dégager la carotte de sondage de coquilles semi-tubulaires, on débite l'élément de tube intérieur 1 avec la carotte de sondage qu'il contient en sections 7 de longueur appropriée au moyen d'un outil peu encombrant, tel qu'une scie circulaire portative 8 (figure 2).

Les sections 7 de tube intérieur 1 peuvent être utilisées comme boîtes à carottes pour le transport et la conservation des carottes, aussi bien avant qu'après le sectionnement dans le sens longitudinal.

Pour ce faire, les sections 7 de tube intérieur 1 peuvent être bouchées à leurs extrémités par des embouts 9.

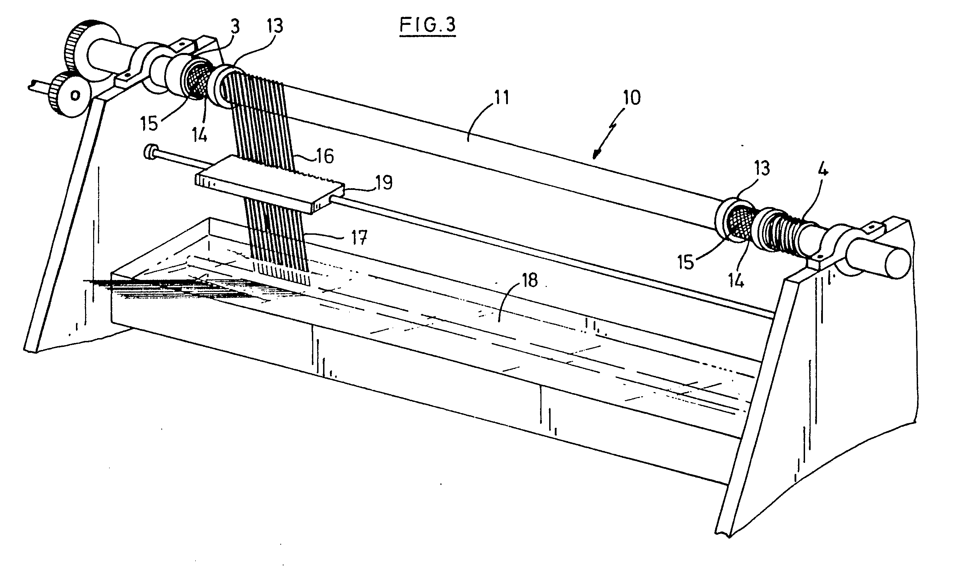

La machine montrée à la figure 3 et désignée dans son ensemble par la notation de référence 10 est destinée à fabriquer un élément de tube suivant l'invention. Elle comprend un mandrin 11 pouvant tourner autour de son axe longitudinal I-I'. Ce mandrin 11 est entraîné en rotation par une roue dentée 12.

Sur le mandrin 11 sont disposés, à une distance prédéterminée correspondant à la longueur désirée du tube, un nipple de raccord femelle 3 ainsi qu'un nipple de raccord mâle 4 comportant chacun une bague d'accrochage 13 qui présente un diamètre intérieur sensiblement identique à celui du mandrin 11 ainsi qu'une surface extérieure 14 munie d'un moletage 15. Ces bagues 13 sont disposées face à face le long du mandrin 11, comme montré à la figure 3.

Les rainures du moletage 15 correspondent au diamètre des fibres torsadées 16 qui sont enroulées hélicoïdalement sur le mandrin 11, pour rendorcer le corps de l'élément de tube intérieur. Les fibres torsadées 16 sont constituées par un très grand nombre de brins de fibres de verre. On met les fibres torsadées éventuellement en nappes 17 et on les enrobe de résine époxy en les plongeant dans un bain 18. On les enroule ensuite hélicoïdalement sur le mandrin 11 de la machine 10 de manière à former un certain angle de croisement α compris entre 40 et 60° en les superposant en couches homogènes. Les nappes 17 sont guidées par un coulisseau 19. On utilise avantageusement une résine époxy à base d'oxyde d'éthylène ou d'épichlorhydrine et de Bisphénol A.

L'angle de croisement détermine la résistance du tube aux efforts de traction, d'une part, et à l'éclatement, d'autre part.

Plus l'angle de croisement est grand, plus importante sera la résistance à la traction, mais plus faible par contre sera la résistance à l'éclatement.

Pour un tube intérieur de diamètre moyen, soit 12 centimètres, on choisira de préférence un angle de croisement de 55°. Cet angle permet de résister à des efforts de traction supérieurs à trois tonnes.

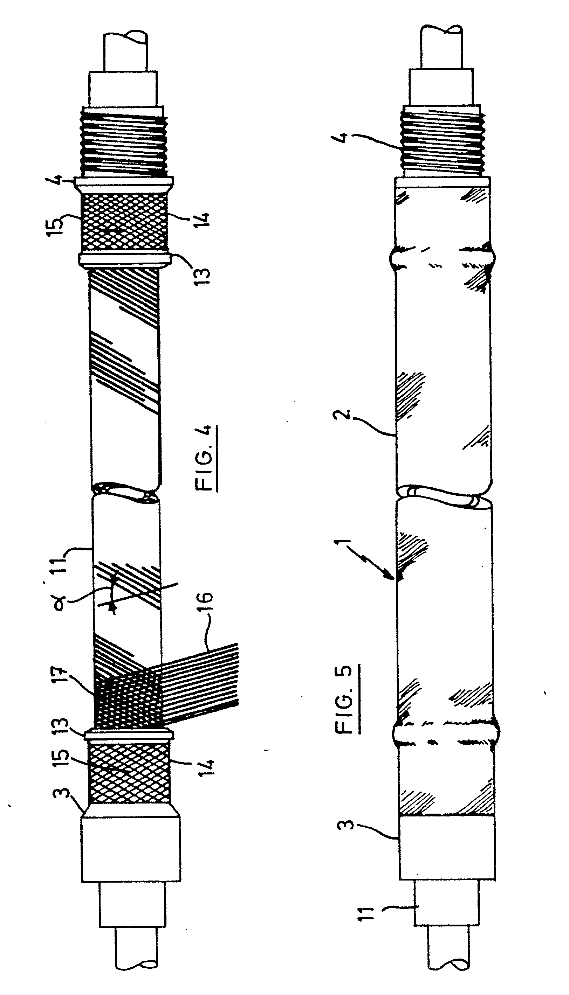

Pour faciliter le durcissement de la résine époxy précitée, on pulvérise un durcisseur à base d'une solution aqueuse d'un peroxyde, régulièrement sur toute la surface de l'élément de tube au cours de sa fabrication. Les nappes de fibres 17 sont enroulées sur le mandrin 11 de manière à recouvrir suivant les stries les bagues moletées 13 des nipples de raccord 3, 4 de manière à encastrer solidement ceux-ci dans le corps de l'élément de tube 1, comme montré à la figure 5.

Comme les nappes 17 de fibres de verre offrent une résistance à la traction exceptionnelle, elles conféreront aux éléments de tubes susdits une résistance tout à fait comparable à celle d'un tube d'acier, non seulement vis-à-vis de l'éclatement et l'écrasement, mais également en traction.

Lors du repêchage de l'appareil carottier, le tube intérieur est soumis parfois à des sollicitations énormes.

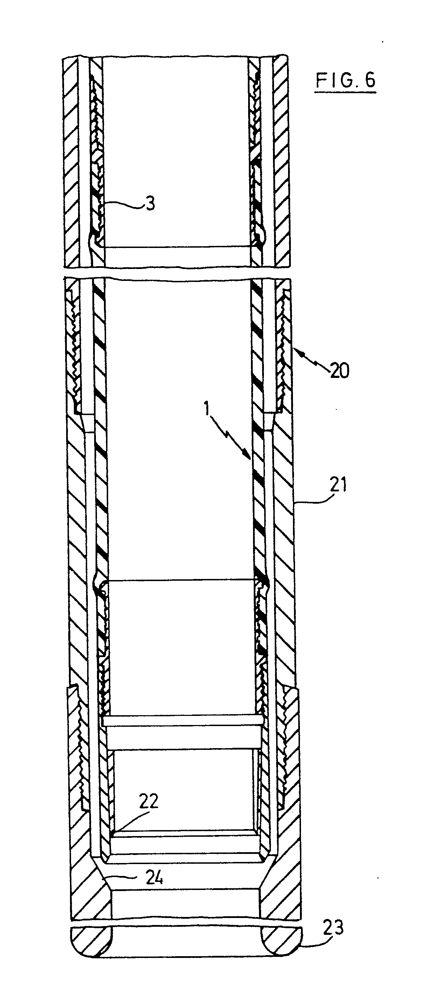

En effet, l'effort de traction à exercer sur l'appareil carottier 20 pour détacher une carotte prélevée dans un sol rocheux peut être très important. Cet effort de traction est fourni en soulevant l'appareil carottier 20 tout entier, y compris les tubes intérieur 1 et extérieur 21 (fig. 6). Alors que le tube extérieur 21 en acier remonte librement sans se déformer irréversiblement, le tube intérieur 1 est calé à une extrémité par le manchon extracteur de carotte 22 à la base de la carotte de sondage. Comme il est fixé à son autre extrémité au tube extérieur 21, par un verrou, le tube intérieur sera soumis à une traction importante et sera inévitablement étiré d'une longueur correspondant à la distance prévue entre le manchon extracteur de carotte 22 et la couronne de forage 23 pour la circulation du fluide de forage.

En s'étirant, le tube intérieur 1 permet au manchon extracteur de carotte 22 de prendre appui sur un épaulement 24 prévu sur la couronne de forage 23. Le tube extérieur 21 constitué entièrement en acier peut transmettre à cette couronne des efforts de traction bien plus importants que le tube intérieur 1.

Les efforts de traction importants à mettre en jeu pour détacher la carotte du manchon extracteur de carotte 22 sont appliqués sur la carotte par l'intermédiaire de cet épaulement 24 qui est solidaire du tube extérieur 21.

L'allongement du tube intérieur 1 correspond naturellement à la distance séparant le manchon extracteur de carotte 22 de l'épaulement prévu sur la couronne de forage, cette distance étant prévue pour la circulation du liquide de forage vers la couronne de forage.

Par leur ancrage sur les fibres de verre torsadées, les nipples de raccord de grandeur usuelle (4 pouces) sont capables de résister à des tractions énormes de trois à dix tonnes pouvant survenir lors de forages profonds, sans risque de cisaillement ou de déformation, malgré les températures élevées régnant dans les puits de forage où ces tubes sont utilisés. Ces températures peuvent atteindre 80 °C pour un forage d'environ 2 000 m de profondeur et même plus de 100 °C pour un forage d'environ 3 000 m de profondeur.

La résine synthétique renforcée de fibres de verre présente un module de Young faible par rapport à celui de l'acier. Lors de l'utilisation d'un élément de tube intérieur en résine synthétique, le tube soumis à une traction importante se déformera bien avant les nipples de raccord en acier taraudés, de manière à ce que ceux-ci ne se détériorent pas et puissent être réutilisés.

Dans ce but, les nipples en acier 3 et 4 sont enlevés, en sectionnant l'élément de tube, lorsque celui-ci est remonté avec la carotte de sondage, lors du repêchage de l'appareil carottier.

Les résidus de résine qui adhèrent aux nipples sont éliminés par chauffage et les nipples de raccord sont prêts pour être réutilisés.

Les avantages des éléments de tube intérieurs décrits ci-dessus sont :
— absence de problèmes de corrosion ;
— homogénéité accrue des tubes au point de vue résistance ;
— possibilité de transport d'une carotte de sondage non remaniée, telle qu'elle a été forée ;
— simplicité de fabrication : le diamètre intérieur des éléments de tube correspond exactement au diamètre du mandrin. Le diamètre extérieur peut varier dans des limites assez larges puisqu'il n'est soumis qu'à une seule contrainte, à savoir, permettre un passage suffisant pour la circulation du liquide de forage ;
— possibilité de carottage sur chantier pour une analyse immédiate par les géologues ;
— utilisation d'un outillage portable ;
— possibilité de récupération des filets de raccord en cas d'utilisation de nipples de raccord en acier.

Il est évident que l'invention n'est pas exclusivement limitée à la forme de réalisation représentée et que bien des modifications peuvent être apportées dans la forme, la disposition et la constitution de certains des éléments intervenant dans sa réalisation à condition que ces modifications ne soient pas en contradiction avec l'objet de chacune des revendications suivantes.

## Revendications

1. Elément de tube (1) intérieur pour appareil carottier à double tube, constitué d'un tronçon de tube de section sensiblement constante, en résine synthétique, muni à ses extrémités de raccords destinés à le relier à d'autres éléments de tube intérieurs, caractérisé en ce que le tronçon de tube susdit (1) est constitué entièrement de résine synthétique armée de fibres (5) et en ce que le tube (1) susdit chevauche, à chacune de ses extrémités, une partie des raccords (3, 4) présentant une surface rugueuse 6 accrochée aux fibres (5) précitées.

2. Elément de tube intérieur suivant la revendication 1, caractérisé en ce que les fibres susdites sont torsadées et en ce que les raccords (3, 4) susdits comprennent une surface (6) munie d'une série de stries destinées à accrocher les fibres torsadées (5).

3. Elément de tube intérieur suivant la revendication 1 ou 2, caractérisé en ce que les fibres torsadées (5) sont mises en nappes (17) et en ce que les raccords susdits comprennent chacun une bague (13) munie d'un moletage (15) destiné à accrocher les nappes (17) susdites.

4. Elément de tube intérieur suivant l'une quelconque des revendications 1 à 3, caractérisé en ce que les raccords (3, 4) susdits sont des nipples en acier disposés coaxialement au tube (1) à chacune des extrémités de ce tube (1) et incorporés à celui-ci, de manière que le diamètre intérieur de la partie chevauchée par le tube (1) soit égal au diamètre intérieur du tube.

5. Elément de tube intérieur suivant l'une quelconque des revendications précédentes, caractérisé en ce qu'il est réalisé en résine époxy.

6. Elément de tube intérieur suivant l'une quelconque des revendications précédentes, caractérisé en ce qu'il est réalisé à l'aide d'une résine synthétique à base d'oxyde d'éthylène et de Bisphénol A.

7. Elément de tube intérieur suivant l'une quelconque des revendications précédentes, caractérisé en ce que le tube intérieur est réalisé en résine époxy armée de nappes (17) de fibres de verre.

8. Elément de tube intérieur suivant la revendication 7, caractérisé en ce qu'il comprend plusieurs nappes de fibres de verre entrecroisées.

9. Procédé de fabrication d'un élément de tube intérieur suivant l'une quelconque des revendications 1 à 8, caractérisé en ce qu'on dispose sur un mandrin cylindrique (11) présentant une section constante et tournant autour de son axe longitudinal, à une distance prédéterminée, correspondant à la longueur de l'élément de tube (1) à réaliser, deux raccords (3, 4) dont une partie présente un diamètre intérieur sensiblement identique à celui du mandrin (11), ainsi qu'une surface extérieure (14) rugueuse, et en ce qu'on enroule hélicoïdalement autour dudit mandrin (11), des fibres enrobées de résine synthétique en recouvrant également la partie rugueuse des raccords (3, 4) susdits.

10. Procédé suivant la revendication 9, caractérisé en ce qu'on enroule les fibres sous forme de nappes (17) entrecroisées autour du mandrin (11), de manière que l'angle de croisement des fibres soit compris entre 40 et 60 °C.

11. Procédé suivant la revendication 9 ou 10, caractérisé en ce qu'on dispose sur le mandrin (11) précité, deux nipples de raccord (3, 4) en acier muni chacun d'une bague d'accrochage (13) qui présente un diamètre intérieur sensiblement identique à celui du mandrin (11) et une surface extérieure (14) munie d'un moletage (15), et qu'on enroule hélicoïdalement sur le mandrin (11) et sur chaque bague (13) susdite, des nappes (17) de fibres enrobées de résine synthétique.

12. Procédé suivant l'une quelconque des revendications 9 à 10, caractérisé en ce que les nappes (17) sont constituées de fibres de verre et présentent un angle de croisement compris entre 40 et 60°.

13. Procédé suivant l'une quelconque des revendications 9 à 12, caractérisé en ce qu'on enrobe les fibres d'une résine synthétique, en les plongeant dans un bain (18) de cette résine.

14. Procédé suivant l'une quelconque des revendications 9 à 12, caractérisé en ce qu'on enrobe des fibres de verre de résine époxy en les plongeant dans un bain (18) de cette résine.

15. Procédé suivant la revendication 14, caractérisé en ce qu'on pulvérise un durcisseur de résine époxy sur toute la surface de l'élément de tube au cours de sa fabrication.

16. Procédé suivant la revendication 15, caractérisé en ce qu'on utilise comme durcisseur de résine époxy, une solution aqueuse d'un peroxyde.

## Claims

1. Inner tube element for a double-tube coring apparatus, said element consisting of a tube length having a substantially constant section, made of synthetic resin and provided at its ends with nipples or couplings for connecting it to other inner tube elements, characterized in that said tube length (1) is entirely made of synthetic resin reinforced with fibers (5) and that said tube length (1) overlaps, at each of its ends, a part of the nipples (3, 4) having a rough surface gripped to said fibers (5).

2. Inner tube element according to claim 1, characterized in that said fibers are twisted and the nipples (3, 4) comprise a surface (6) provided with a multiplicity of ribs or corrugations for gripping the twisted fibers (5).

3. Inner tube element according to claim 1 or 2, characterized in that the twisted fibers (5) are in the form of fiber webs (17) and the nipples each comprise a ring (13) provided with a knurled surface (15) for gripping the fiber webs (17).

4. Inner tube element according to any one of the claims 1 to 3, characterized in that the nipples (3, 4) are steel nipples extending coaxially to the tube (1) at each of the ends of the latter and embedded in said tube (1), so that the inner diameter of the part of the nipples overlapped by the tube (1) is equal to the inner diameter of the tube (1).

5. Inner tube element according to anyone of the preceding claims, characterized in that it is made of epoxy resin.

6. Inner tube element according to anyone of the preceding claims, characterized in that the epoxy resin is made from ethylene oxide and bisphenol A.

7. Inner tube element according to anyone of the preceding claims, characterized in that it is made of epoxy resin reinforced by fibrous glass webs (17).

8. Inner tube element according to claim 7, characterized in that it comprises several glass fiber webs crossing each other.

9. Process for the manufacture of an inner tube element according to any one of the claims 1 to 8, characterized in that two nipples or couplings are placed onto a cylindrical mandrel (11) having a constant section and rotating about its longitudinal axis, at a predetermined distance corresponding to the tube element (1) to be manufactured, a part of said nipples (3, 4) having an inner diameter substantially identical to the diameter of the mandrel and having a rough surface (14), and fibers coated with a synthetic resin are wound helically onto said cylindrical mandrel, so as to overlap the rough part of said nipples.

10. Process according to claim 9, characterized in that the fibers are wound in the form of twisted fiber webs crossing each other, so that the crossing angle is comprised between 40 and 60°.

11. Process according to claim 9, characterized in that two steel nipples (3, 4) or couplings each provided with a gripping ring (13) and having an inner diameter which is substantially equal to the diameter of a mandrel (11) and an outer milled (15) or knurled surface (14) are placed onto said mandrel (11) at a predetermined distance from each other, and webs (17) of fibers coated with a synthetic resin are wound helically onto the mandrel (11) and onto each of said rings of the spaced nipples.

12. Process according to anyone of the claims 9 to 10, characterized in that the fiber webs (17) are made of fiber glass and cross each other by an angle comprised between 40 and 60°.

13. Process according to anyone of the claims 9 to 12, characterized in that the fibers are coated with a synthetic resin by dipping them in a resin bath (18).

14. Process according to claim 9, characterized in that fiber glass is coated with an epoxy resin by dipping them in an epoxy resin bath.

15. Process according to claim 14, characterized in that an hardening agent for the epoxy resin is sprayed onto the surface of the tube element during the manufacture thereof.

16. Process according to claim 15, characterized in that an aqueous solution of a peroxide is used as hardening agent of the epoxy resin.

**Ansprüche**

1. Kernrohrelement für eine Doppelrohr-Kernbohrvorrichtung, bestehend aus einem Rohrteilstück mit einem im wesentlichen konstanten Querschnitt aus einem synthetischen Harz, dessen Enden mit Verbindungsstücken versehen sind, mit Hilfe welcher das Teilstück mit weiteren Kernrohrelementen verbunden werden kann, dadurch gekennzeichnet, dass das Rohrteilstück (1) ganz aus einem synthetischen, mit Fibern (5) verstärkten Harz besteht und an jedem seiner Enden einen Teil der mit einer an den Fibern (5) haftenden rauhen Oberfläche (6) versehenen Verbindungsstücke überlappt.

2. Kernrohrelement laut Anspruch 1, dadurch gekennzeichnet, dass die Fibern verdrallt sind und die Verbindungsstücke (3, 4) eine mit einer Reihe von Riefen versehene Oberfläche (6) aufweisen, in denen die verdrallten Fibern einhaken.

3. Kernrohrelement laut Anspruch 1 oder 2, dadurch gekennzeichnet, dass die verdrallten Fibern (5) zu Vliesen (17) zusammengelegt werden und jedes der Verbindungsstücke eine Endring (13) und eine gerändelte Zone (15) aufweist, an welcher die Vliese (17) anhaken.

4. Kernrohrelement laut einem der Ansprüche 1 bis 3, dadurch gekennzeichnet, dass die Verbindungsstücke (3, 4) aus Stahlnippeln bestehen, welche koaxial zum Rohrelement (1) in die beiden Enden desselben eingebracht werden, wobei der innere Durchmesser des von dem Rohr (1) überlappten Teils gleich dem inneren Durchmesser dieses Rohres ist.

5. Kernrohrelement laut einem der vorhergehenden Ansprüche, dadurch gekennzeichnet, dass es aus einem Epoxydharz hergestellt ist.

6. Kernrohrelement laut einem der vorhergehenden Ansprüche, dadurch gekennzeichnet, dass es aus einem Kunstharz auf Basis von Äthylenoxyd und Bisphenol A hergestellt wurde.

7. Kernrohrelement laut einem der vorhergehenden Ansprüche, dadurch gekennzeichnet, dass es aus einem mit Glasfaservliesen (17) verstärkten Epoxydharz besteht.

8. Kernrohrelement laut Anspruch 7, dadurch gekennzeichnet, dass es mehrere übers Kreuz gelegte Glasfaservliese begreift.

9. Verfahren zur Herstellung eines Kernrohrelements laut einem der Ansprüche 1 bis 8, dadurch gekennzeichnet, dass auf einen um seine Längsachse drehenden zylindrischen Dorn (11) mit gleichbleibendem Querschnitt in einem der Länge des herzustellenden Rohrelements (1) entsprechenden Abstand zwei Verbindungsstücke (3, 4) aufgesetzt werden, von denen ein Teil einen inneren Durchmesser aufweist, der im wesentlichen dem inneren Durchmesser des Dorns entspricht, und welche eine rauhe Oberfläche (14) besitzen, und auf diesen Dorn und die rauhe Oberfläche der Verbindungsstücke mit einem synthetischen Harz überzogene Fibern spiralförmig aufgerollt werden.

10. Verfahren laut Anspruch 9, dadurch gekennzeichnet, dass die Fibern in Form von gekreuzten Vliesen auf den Dorn aufgerollt werden, wobei der Kreuzungswinkel der Fibern zwischen 40 und 60° liegt.

11. Verfahren laut Anspruch 9 oder 10, dadurch gekennzeichnet, dass auf den Dorn (11) zwei Stahlverbindungsnippel (3, 4) mit jeweils einem Mitnahmering (13) mit einem inneren Durchmesser, welcher wesentlich gleich dem Durchmesser des Dorns (11) ist, und mit einer gerändelten Zone (15) versehenen Aussenfläche (14) aufgebracht werden und auf den Dorn (11) und auf die beiden Ringe (13) mit Kunstharz überzogene Faservliese (17) spiralförmig aufgerollt werden.

12. Verfahren laut einem der Ansprüche 9 und 10, dadurch gekennzeichnet, dass die Vliese (17) aus Glasfasern bestehen und einen Kreuzungswinkel zwischen 40 und 60° aufweisen.

13. Verfahren kaut einem der Ansprüche 9 bis 12, dadurch gekennzeichnet, dass die Fibern mit einem Kunstharz überzogen werden, indem man dieselben in ein Harzbad (18) taucht.

14. Verfahren laut einem der Ansprüche 9 bis 12, dadurch gekennzeichnet, dass die Glasfasern mit einem Epoxydharz überzogen werden, indem man dieselben in ein Harzbad (18) taucht.

15. Verfahren laut Anspruch 14, dadurch gekennzeichnet, dass während der Herstellung des Rohrelements ein Epoxydharzverhärter auf die ganze Oberfläche desselben aufgesprüht wird.

16. Verfahren laut Anspruch 15, dadurch gekennzeichnet, dass als Epoxydharzverhärter eine wässerige Peroxydlösung verwendet wird.

FIG.1

3    5    6    2    1    5    6    4

FIG. 2

9    8    7    7    9    7    7

0 056 930

FIG.3

0 056 930

FIG. 4

FIG. 5

FIG. 6